# EUROPEAN PATENT SPECIFICATION

(11) **EP 0 739 381 B1**
(45) Date of publication and mention of the grant of the patent: **16.06.1999**
(21) Application number: 94923928.9
(22) Date of filing: 14.07.1994
(51) Int. Cl.: C08L 23/14, C08F 210/06, C08K 5/09

(54) **POLYMER COMPOSITIONS**
POLYMERZUSAMMENSETZUNGEN
COMPOSITIONS POLYMERES

(30) Priority: 14.07.1993 US 92651; 15.07.1993 US 91951
(43) Date of publication of application: 30.10.1996
(73) Proprietor: UNION CARBIDE CHEMICALS & PLASTICS TECHNOLOGY CORPORATION, Danbury, Connecticut 06817-0001 (US)
(72) Inventor: CHATTERJEE, Ananda, Mohan, Houston, TX 77450 (US); CAMPBELL, Randolph, Neil, Katy, TX 77493 (US); NEMZEK, Thomas, Lloyd, Katy, TX 77449 (US)
(74) Representative: Allard, Susan Joyce
(86) International application number: US9407718
(87) International publication number: WO9502638

(56) References cited:
- EP-A- 0 278 470
- EP-A- 0 282 882
- EP-A- 0 469 482
- EP-A- 0 483 523
- EP-A- 0 563 818

## Description

### Technical Field

This invention relates to certain polymer compositions having an excellent balance of mechanical properties, such as low hexane extractables content, low heat seal initiation temperatures, and optical properties, such as good clarity, low yellowing, and low haze. More particularly, the invention relates to random copolymers of propylene and butene-1 of particular compositions.

### Background Art

Polyolefin polymers compositions have gained wide acceptance and usage in numerous commercial applications because of the relatively low cost of the polymers and the desirable properties they exhibit. Such commercial applications include plastic film, such as mono-oriented cast film and biaxially oriented films, for food packaging, containers for food and medical devices such as syringes.

It is very important for materials used as containers for foods and medical devices, that the presence or absence of impurities or foreign substances such as refuse in the contents of a container can be externally confirmed. It is not desirable that the color tint of the contents be changed when it is observed through the container. For this reason, it is desired to use a polymer composition of good transparency or clarity, in these fields.

There has widely been used a method for improving the clarity or transparency of polymer composition, in particular polypropylene resins, which method comprises incorporating a sorbitol derivative into the resins. Yokote et al, U.S. 5,153,249 discloses a polypropylene resin composition which incorporates an additive package of 1-3, 2-4 di-benzylidene sorbitol which is well-known as a nucleating additive.

Although the reference cited above teaches a copolymer composition exhibiting some improvement in optical properties, it would be of advantage to provide improved random copolymer compositions including a process for producing the improved copolymer compositions, having an improved balance of low haze (i.e., good transparency), low blooming, low yellowing, low hexane extractables content, and low heat seal initiation temperature.

In recent years, the film industry is requesting polymer compositions with lower heat seal initiation temperature in order to facilitate the film converting process. Polypropylene random copolymers containing ethylene as the comonomer are typically used for this application. These ethylene-containing polymers typically have high heat seal initiation temperatures. Further, as ethylene random film ages, a "grease" or "bloom" layer develops on the surface of the film; this adversely effects the clarity of the film.

In an attempt to provide polymer compositions suitable for making films, various polymer blends for packaging film are known. Isaka et al, U.S. 4,230,767 discloses a packaging material with heat seal packaging properties composed of blends of a polypropylene/ethylene copolymer with a variety of other propylene olefins and copolymers. Hwo, U.S. 4,618,804, discloses polybutylene/propylene polymer film having low heat sealing temperatures as well as good hot tack and clarity. The film comprises a polypropylene copolymer as a core layer and a polymer blend as a surface layer which includes a butene-1/propylene copolymer having a propylene content of from about 10% to about 25% by weight. European Patent Application 246369 discloses butene copolymer blends comprising (a) copolymer of butene-1 and propylene wherein the propylene content is 12 to 30% by weight, and (b) a copolymer of propylene and ethylene.

Oda et al, U.S. 4,168,361, disclose random copolymers comprising 40 to 90 mole% of propylene and 60 to 10 mole% of 1-butene, which are produced in the presence of a magnesium, titanium-containing catalyst. The patent states that the elongation at break, as measured by JIS K6301, of its copolymers must be at least 300%. Fakui et al, U.S. 4,600,762, discloses a random copolymer of 60 to 99 moles of 1-butene and less than 40 to 1 moles of polypropylene. Balloni et al, 5,110,671 disclosed an oriented, multilayer polymer film.

EP-A-278470 discloses compositions comprising a copolymer of propylene and butene-1 or ethylene which contain various nucleating agents. The copolymers have a melt flow index of less than or equal to 5g/10 min.

EP-A-0426139 discloses a process for copolymerizing propylene and 1-butene. The process is carried out at a partial pressure of propylene to 1-butene of 1:1 to 45:1 which corresponds to a weight percentage of 1-butene in the final polymer of 1.2 to 34%. There is no disclosure of the incorporation of clarifying agents in these compositions.

Low hexane extractables content copolymers are very desirable because the U.S. Food and Drug Administration ("FDA") has specific solubles requirements that polyolefin copolymers must satisfy in order to be used for food or medical packaging. In particular, FDA regulations require that the polyolefin copolymer have a hexane extractable content (at 50°C) of less than 2.6% for holding food during cooking and less than 5.5% for general food packaging applications. As noted previously, polypropylene random copolymers containing ethylene are typically used for food and medical packaging. However, some ethylene containing randoms require an additional washing step during manufacture to meet the FDA hexane extractables limits.

### Disclosure of the Invention

The present invention relates to polymer compositions having an excellent balance of improved mechanical and optical properties.

More particularly, in one aspect the present invention relates to a copolymer composition comprising (a) a random copolymer of 0.8% to 20% by weight of butene-1 and 80% to 99.2% by weight of propylene (b) at least one additive, and (c) a clarifying agent which is calcium montanate, at least one polyolefin wax having a viscosity of from 500 mPa-seconds to 2500 mPa-seconds at 170°C or a combination thereof, which composition has an ASTM-D1238, Cond. L. melt flow of from 3 dg/min to 50 dg/min.

The random copolymer preferably has the following properties:
(a) an elongation at break in the range from 600% to 2000%,
(b) a heat seal initiation temperature in the range from 105°C to 140°C,
(c) a haze of up to 6%, as measured according to ASTM D-1003, and
(d) hexane extractables at 50°C of up to 5.5%.

The invention also relates to a process for producing the polymer composition as defined in claim 13 and to a visbroken polymer composition as defined in claim 16. The copolymer is produced in the presence of a high activity stereoregular catalyst system obtained by contacting (i) an olefin polymerization procatalyst with (ii) an organoaluminum cocatalyst and (iii) a selectively control agent.

### Best Mode for Carrying out the Invention

The present invention comprises certain polymer compositions which, because of the particular composition thereof, exhibit an improved balance of mechanical properties and optical properties. These compositions are characterized as propylene/butene-1 random copolymer resins. The resulting polymer compositions have low hexane extractables content, low heat seal initiation temperature and excellent optical properties, such as low haze, low blooming, and low yellowing. According to an embodiment of the invention, the polymer resin compositions are characterized as comprising (1) a random copolymer of 0.8 to 20% by weight butene-1 and 80% to 99.2% by weight of propylene, (2) at least one additive and (3) at least one haze-reducing, non-nucleating, clarifying agent which is calcium montanate, at least one polyolefin wax having a viscosity of from 500 mPa-seconds to 2500 mPa-seconds at 170°C or combinations thereof, which composition has an ASTM-D1238 Cond. L melt flow of from 3dg/min to 50 dg/min.

A preferred copolymer is a random copolymer comprising 5% to 15% by weight of butene-1 and 85% to 95% by weight of propylene and having
(a) an ASTM D882 elongation at break in the range from 600% to 2,000%,
(b) a heat seal initiation temperature, for a 25.4 micrometre (1 mil) film sample sealed at 101kPa for about one second using a Sentinel Model 12-12A heat sealer with a 3mm wide bar in the range from 105°C to 140°C,
(c) a 21 C.F.R. §177.1520 (c) (3.1 & 3.2) hexane extractable content at 50°C, of up to 5.5%, and
(d) an ASTM D-1003 haze of up to 2%,

Also preferred is a random copolymer comprising 5% to 15% by weight of butene-1 and 85% to 95% by weight of propylene, and having
(a) an ASTM D882 elongation at break in the range from 600% to 2,000%,
(b) a heat seal initiation temperature, for a 25.4 micrometre (1 mil), film sample sealed at 101kPa for about 1 second using a Sentinel Model 12-12A heat sealer with a 3mm wide bar, in the range from 105°C to 140°C,
(c) an ASTM D-1003 haze of up to 2%,
(d) a 21 C.F.R. §177.1520(c) (3.1 & 3.2) hexane extractable content at 50°C, of up to 5.5%,
(e) a 21 C.F.R. 177.1520 xylene solubles content at 23°C of up to 13%, and
(f) an ASTM D882 modulus (1% secant measured at 1.3mm (0.05 inches) per minute) of at least 410 mPa (60,000 psi)

The present invention also includes within its scope a room temperature aged, heat sealable packaging film or sheet obtained from a polymer composition as desired comprising the random copolymer having features (a) to (f) as defined above.

The polymer resin composition of the present invention are obtained by polymerizing propylene and butene-1 under polymerization conditions in the presence of a titanium-based, olefin polymerization catalyst system, such as magnesium, titanium-containing polymerisation catalyst system. Such polymerizaton catalyst systems are typically obtained by the combination of a titanium halide-based catalyst component, an organoaluminum compound and one or more electron donors. For convenience of reference, the solid titanium-containing catalyst component is referred to herein as "procatalyst", the organoaluminum compound, as "cocatalyst", and an electron donor compound, which is typically used separately or partially or totally complexed with the organoaluminum compound, as "selectivity control agent" (SCA).

Although a variety of chemical compounds are useful for the production of the procatalyst, a typical procatalyst of the invention is prepared by halogenating a magnesium compound of the formula MgR'R", wherein R' is an alkoxide or aryloxide group and R" is an alkoxide, hydrocarbyl carbonate, aryloxide group or halogen, with a halogenated tetravalent titanium compound in the presence of halohydrocarbon and an electron donor.

The magnesium compound employed in the preparation of the solid catalyst component contains alkoxide, aryloxide, hydrocarbyl carbonate or halogen. The alkoxide, when present, contain from 1 to 10 carbon atoms. Alkoxide containing from 1 to 8 carbon atoms is preferable, with alkoxides of 2 to 4 carbon atoms being more preferable. The aryloxide, when present, contains from 6 to 10 carbon atoms, with 6 to 8 carbon atoms being preferred. The hydrocarbyl carbonate, when present, contains 1 to 10 carbon atoms. When halogen is present, it is preferably present as bromine, fluorine, iodine or chlorine, with chlorine being more preferred.

Suitable magnesium compounds are magnesium chloride, ethoxy magnesium bromide, iscbutoxy magnesium chloride, phenoxy magnesium iodide, magnesium fluoride, cumyloxy magnesium bromide, magnesium diethoxide, magnesium isopropoxide, magnesium stearate, magnesium ethyl carbonate and naphthoxy magnesium chloride. The preferred magnesium compound is magnesium diethoxide.

Halogenation of the magnesium compound with the halogenated tetravalent titanium compound is effected by using an excess of the titanium compound. At least 2 moles of the titanium compound should ordinarily be used per mole of the magnesium compound. Preferably from 4 moles to 100 moles of the titanium compound are used per mole of the magnesium compound, and most preferably from 8 moles to 20 moles of the titanium compound are used per mole of the magnesium compound.

Halogenation of the magnesium compound with the halogenated tetravalent titanium compound can be effected by contacting the compounds at an elevated temperature in the range from 60°C to 150°C, preferably from 70°C to 120°C. Usually the reaction is allowed to proceed over a period of 0.1 to 6 hours, preferably from 0.5 to 3.5 hours. The halogenated product is a solid material which can be isolated from the liquid reaction medium by filtration, decantation or a suitable method.

The halogenated tetravalent titanium compound employed to halogenate the magnesium compound contains at least two halogen atoms, and preferably contains four halogen atoms. The halogen atoms are chlorine atoms, bromine atoms, iodine atoms or fluorine atoms. The halogenated tetravalent titanium compounds has up to two alkoxy or aryloxy groups. Examples of suitably halogenated tetravalent titanium compounds include alkoxy titanium halides, diethoxytitanium dibromide, isopropoxytitanium triiodide, dihexoxytitanium dichloride, and phenoxytitanium trichloride, titanium tetrahalides such as titanium tetrachloride and titanium tetrabromide. The preferred halogenated tetravalent titanium compound is titanium tetrachloride.

Suitable halohydrocarbons include aromatic or aliphatic, including cyclic and alicyclic compounds. Preferably the halohydrocarbon contains 1 or 2 halogen atoms, although more may be present if desired. It is preferred that the halogen is, independently, chlorine, bromine or fluorine. Exemplary of suitable aromatic halohydrocarbons are chlorobenzene, bromobenzene, dichlorobenzene, dichlorodibromobenzene, chlorotoluene, dichlorotoluene, chloronaphthalene. Chlorobenzene, chlorotoluene and dichlorobenzene are the preferred halohydrocarbons, with chlorobenzene and chlorotoluene being more preferred.

The aliphatic halohydrocarbons which can be employed suitably of 1 to 12 carbon atoms. Preferably such halohydrocarbons have 1 to 9 carbon atoms and at least 2 halogen atoms. Most preferably, the halogen is present as chlorine. Suitable aliphatic halohydrocarbons include dibromomethane, trichloromethane, 1,2-dichloroethane, trichloroethane, dichlorofluoroethane, hexachloroethane, trichloropropane, chlorobutane, dichlorobutane, chloropentane, trichlorofluorooctane, tetrachloroisooctane, dibromodifluorodecane. The preferred aliphatic halohydrocarbons are carbon tetrachloride and trichloroethane.

Aromatic halohydrocarbons are preferred, particularly those of 6 to 12 carbon atoms, and especially those of 6 to 10 carbon atoms.

Suitable inert hydrocarbon diluents include aromatic hydrocarbons such as toluene, o-xylene, m-xylene, p-xylene, benzene, ethylbenzene, propylbenzene such as isopropylbenzene or cumene, trimethylbenzene and the like which are liquid at normal temperature.

The electron donors which are suitably included within the procatalyst are the generally conventional electron donors employed in titanium-based olefin polymerization procatalysts including ethers, esters, ketones, amines, imines, nitriles, phosphines, stibines, arsines and alcoholates. The preferred electron donors are esters and particularly aliphatic esters of aromatic monocarboxylic or dicarboxylic acids. Examples of such preferred electron donors are methyl benzoate, ethyl benzoate, ethyl p-ethoxybenzoate, ethyl p-methylbenzoate, diethyl phthalate, dibutylphthalate, diisobutyl phthalate, diisopropyl terephthalate and dimethyl naphthalenedicarboxylate. The electron donor is a single compound or a mixture of two or more compounds but preferably the electron donor is provided as a single compound. of the preferred ester electron donors, ethyl benzoate and diisobutyl phthalate are particularly preferred. Sufficient electron donor is provided so that the molar ratio of electron donor to magnesium in the procatalyst is from 0.002 to 0.3. It is preferred that the molar ratio of electron donor to magnesium in the procatalyst is from 0.03 to 0.2, with a ratio from 0.03 to 0.16 being more preferred.

After the solid halogenated product has been separated from the liquid reaction medium, it is treated one or more times with additional halogenated tetravalent titanium compound. Preferably, the halogenated product is treated multiple times with separate portions of the halogenated tetravalent titanium compound. Better results are obtained if the halogenated product is treated twice with separate portions of the halogenated tetravalent titanium compound. As in the initial halogenation, at least 2 moles of the titanium compound should ordinarily be employed per mole of the magnesium compound, and preferably from 4 moles to 100 moles of the titanium compound are employed per mole of the magnesium compound, most preferably from 4 moles to 20 moles of the titanium compound per mole of the magnesium compound.

The reaction conditions employed to treat the solid halogenated product with the titanium compound are the same as those employed during the initial halogenation of the magnesium compound.

Optionally, the solid halogenated product is treated at least once with one or more acid chlorides after washing the solid halogenated product at least once with additional amounts of the halogenated tetravalent titanium compound. Suitable acid chlorides include benzoyl chloride and phthaloyl chloride. The preferred acid chloride is phthaloyl chloride.

After the solid halogenated product has been treated one or more times with additional halogenated tetravalent titanium compound, it is separated from the liquid reaction medium, washed at least once with an inert hydrocarbon of up to 10 carbon atoms to remove unreacted titanium compounds, and dried. Exemplary of the inert hydrocarbons that are suitable for the washing are isopentane, isooctane, hexane, heptane and cyclohexane.

The final washed product has a titanium content of from 1.5 percent by weight to 6.0 percent by weight, preferably from 2.0 percent by weight to 4.0 percent by weight. The atomic ratio of titanium to magnesium in the final product is between 0.01:1 and 0.2:1, preferably between 0.02:1 and 0.1:1.

The cocatalyst is an organoaluminum compound which is selected from the aluminum-based cocatalysts conventionally employed with titanium-based procatalysts. Illustrative organoaluminum compounds are trialkylaluminum compounds, alkylaluminum alkoxide compounds and alkylaluminum halide compounds wherein each alkyl independently has from 2 to 6 carbon atoms inclusive. The preferred organoaluminum compounds are halide free and particularly preferred are the trialkylaluminum compounds such as triethylaluminum, triisobutylaluminum, triisopropylaluninum and diethylhexylaluminum. Triethylaluminum is the preferred member of the class of trialkylaluminum compounds. The cocatalyst is employed in a sufficient quantity to provide a ratio of aluminum atoms to titanium atoms in the procatalyst from 1:1 to 300:1 but preferably from 10:1 to 100:1.

The organoaluminum cocatalyst is employed in sufficient quantity to provide from 1 mole to 150 moles of aluminum per mole of titanium in the procatalyst. It is preferred that the cocatalyst is present in sufficient quantities to provide from 10 moles to 100 moles of aluminum per mole of titanium in the procatalyst.

The selectivity control agents which are employed in the production of the olefin polymerization catalyst are those conventionally employed in conjunction with titanium-based procatalysts and organoaluminum cocatalysts. Suitable selectivity control agents include those electron donors as listed above for use in procatalyst production but also include organosilane compounds such as alkylalkoxysilanes and arylalkoxysilanes of the formula

R'ᵣSi(OR)₄₋ᵣ

wherein R' is alkyl or aryl of up to 32 carbon atoms inclusive, R is lower alkyl of up to 4 carbon atoms and r is 0 to 3.

Illustrative of the suitable selectivity control agents are esters such as ethyl p-ethoxybenzoate, diisobutyl phthalate, ethyl benzoate and ethyl p-methylbenzoate, and organosilanes such as diisobutyldimethoxysilane, n-propyltrimethoxysilane, isopropyltrimethoxysilane, ethyltriethoxysilane, octadecyltriethoxysilane, octadecyltrimethoxysilane, and cyclohexylmethyldimethoxysilane. The selectivity control agent is provided in a quantity sufficient to provide from 0.01 mole to 100 moles per mole of titanium in the procatalyst. It is preferred that the selectivity control agent is provided in a quantity sufficient to provide from 0.5 mole to 70 moles per mole of titanium in the procatalyst, with 8 moles to 50 moles being more preferred.

The manner by which the solid procatalyst precursor, tetravalent titanium halide, the optional inert diluent and the electron donor are contacted is material but not critical and is generally conventional. In one embodiment the procatalyst precursor and the tetravalent titanium halide are mixed and the electron donor is subsequently added to the resulting mixture. In another embodiment, the electron donor and procatalyst precursor are mixed with the tetravalent titanium halide or a mixture of tetravalent titanium halide and optional inert diluent and the resulting solid is contacted one or more additional times with tetravalent titanium halide or the mixture of tetravalent titanium halide and optional inert diluent. The initial contacting of electron donor, procatalyst precursor and tetravalent titanium halide or the tetravalent titanium halide/optional inert diluent mixture is suitably conducted at a temperature from ambient to 150°C. Better interaction of these materials is obtained if they are heated and initial contacting temperatures from 70°C to 130°C are preferred, with temperatures from 75°C to 110°C being more preferred.

During each contacting with tetravalent titanium halide a portion of the inert diluent is optionally present and the reaction is facilitated on some occasions by the additional presence of an acid halide such as benzoyl chloride or phthaloyl chloride. The solid procatalyst is typically finished by a final wash with an inert hydrocarbon of up to 10 carbon atoms and drying under nitrogen. Exemplary of the inert hydrocarbons that are suitable for the washing are isopentane, isooctane, hexane, heptane and cylohexane.

The components of the olefin polymerization catalyst are usually contacted by mixing in a suitable reactor outside the system in which α-olefin is to be polymerized and the catalyst thereby produced is subsequently introduced into the polymerization reactor. Alternatively, however, the catalyst components are introduced separately into the polymerization reactor or, if desired, two or all of the components are partially or completely mixed with each other (e.g. premixing selectivity control agent and the procatalyst) before they are introduced into the polymerization reactor.

The particular type of polymerization process utilized is not critical to the operation of the present invention and the polymerization processes now regarded as conventional are suitable in the process of the invention. The polymerization is conducted under polymerization conditions as a liquid phase or as a gas-phase process utilizing some condensed monomer and employing a fluidized catalyst bed.

The polymerization conducted in the liquid phase employs as reaction diluent an added inert liquid diluent or alternatively a liquid diluent which comprises the olefins, i.e., propylene and butene-1, undergoing polymerization. Typical polymerization conditions include a reaction temperature from 25°C to 125°C, with temperatures from 35°C to 100°C being preferred, and temperatures from 75°C to 90°C being most preferred, and a pressure sufficient to maintain the reaction mixture in a liquid phase. Such pressures are from 1.0MPa (150 psi) to 8.3MPa (1200 psi), with pressures from 1.7MPa (250 psi) to 6.2MPa (900 psi) being preferred. The liquid phase reaction is operated in a batchwise manner or as a continuous or semi-continuous process. Subsequent to reaction, the polymer product is recovered by conventional procedures. The precise control of the polymerization conditions and reaction parameters of the liquid phase process are within the skill of the art.

As an alternate embodiment of the invention, the polymerization may be conducted in a gas phase process in the presence of a fluidized catalyst bed. One such gas phase process polymerization process is described in Goeke et al, U.S. Patent 4,379,759, incorporated herein by reference, involves a fluidized bed, gas phase reaction. A gas phase process typically involves charging to reactor an amount of preformed polymer particles, and lesser amounts of catalyst component. The olefins, i.e., propylene and butene-1, to be polymerized, are passed through the particle bed at a rate sufficient to initiate polymerization. The butene-1 molar content present in the gas mixture being continuously fed is from 3% to 25%, 5% to 20% being preferred and 7% to 20% being more preferred. The molar ratio of butene-1 to propylene in the gas mixture is from 0.03 to 0.33, a ratio from 0.05 to 0.25 being preferred, and a molar ratio from 0.08 to 0.15 being more preferred.

Upon passing through the particle bed, the unreacted gas is withdrawn from the reactor, passed through a gas recycle loop and with make-up feed gas, are again passed through the particle beds on a continuous basis. Copolymer particles are removed from the reactor and additional catalyst is provided to the reactor, often through the use of an inert transport gas such as nitrogen or argon. Polymerized olefin particles are collected at a rate substantially equivalent to its production. The reaction temperature is selected to be below the sintering temperature of the polymer particles and is controlled by an external heat exchanger in a gas cycle loop. Reaction temperatures from 30°C to 90°C may be used, with reaction temperatures from 50°C to 80°C being commonly used, reaction temperatures from 55°C to 75°C being more commonly used and temperatures from 55°C to 70°C being also used. The reaction pressure is generally from 690kPa (100 psi) to 4.1MPa (600 psi) although reaction pressures from 1.0MPa (150 psi) to 3.4MPa (500 psi) are preferred. The precise control of reaction conditions as well as the addition of catalyst and feed gas and the recycle of unreacted monomer is within the skill of the art.

In both the liquid phase and the gas-phase polymerization processes, molecular hydrogen is added to the reaction mixture as a chain transfer agent to regulate the molecular weight of the polymeric product. Hydrogen is typically employed for this purpose in a manner well known to persons skilled in the art. The precise control of reaction conditions, and the rate of addition of feed component and molecular hydrogen is broadly within the skill of the art.

The desired polymeric products are obtained as particulate matter formed by growth of polymer product on the polymer particles provided to the fluidized bed or as particles formed in the reactor. The polymer particles are removed from the reactor at a rate which is substantially equivalent to the rate of polymer production and the particles are passed to a subsequent reaction zone or are finished by conventional methods prior to use.

The polymers produced according to this invention are random copolymers which are predominantly isotactic in structure. The random copolymers of the invention comprise from 0.8% to 20% by weight of butene-1. It is preferred that the random copolymer comprise 5% to 18% or 5% to 15% by weight of butene-1, with 7% to 14.5% or 6% to 14% by weight of butene-1 being more preferred.

According to the present invention, in addition to the random copolymer resin, the polymer composition of the invention further comprises at least one additive and at least one clarifying agent selected from calcium montanate, at least one polyolefin wax or combinations thereof. Calcium montanate is used in an amount ranging from 0.02% to 1.2% by weight of polymer resin composition, preferably 0.05% to 1.0% by weight, 0.1 to 0.5% being more preferred, with 0.15 to 0.3% being most preferred.

The viscosity of the polyolefin wax used in the present invention is from 500 millipascal (m-Pa)-seconds to 2500 m-Pa-seconds (at 170°C), and from 100 m-Pa-seconds to 2000 m-Pa-seconds being preferred. The polyolcfin wax has an average particle size which is typically no more than 2000 µm. The amount of polyolefin wax generally added to the composition ranges from 0.02% to 1.2% by weight of polymer resin composition, preferably 0.05% to 1.0% by weight, with 0.1% to 0.5% being more preferred.

The polyolefin waxes used in the invention typically contain 2 to 3 carbon atoms. Suitable polyolefin waxes include polyethylene waxes such as POLYWAX® 300 polyethylene wax which is available from Petrolite Corporatio and polypropylene waxes, such as Polypropylene wax 230, which is available from Hoechst Celanese and combinations thereof. The preferred polyolefin wax is polypropylene wax.

The at least one additive is selected from a group of suitable additives which includes process stabilizers, antioxidants, ultraviolet absorbers, acid neutralizing agents, such as magnesium aluminum hydroxycarbonate hydrate, and dispersants, which are conventionally employed in commercial polymers compositions and do not adversely affect the haze or transparency of the compositions.

Examples of antioxidants which can be used in the invention are bis(2,4-di-tert-butylphenyl)pentaerythritol diphosphite, tris(2,4-di-butylphenyl)phosphite, 2,6-di-t-butyl-p-methylphenol,n-octadecyl-3-(4-hydroxy-3,5-di-tert-butylphenyl)propionate, tetrakis[methylene(3,5-di-t-butyl-4-hydroxyhydrocinnamate)]methane, pentaerythritol-tetrakis-(β-laurylthiopropionate) and distearyl thiodipropionate.

Typical examples of ultraviolet absorbers include 2-hydroxy-4-n-octoxybenzophenone, 2-(2'-hydroxy-3',5'-di-tert-butylphenyl)-5-chlorobenzotriazole, dimethyl succinate-2-(4-hydroxy-2,2,6,6-tetramethyl-1-piperidyl)ethanol condensate.

The polymer compositions of this invention have one or more of the following characteristics (A) to (G):
(A) An elongation at break, as measured according to ASTM D882, in the range of 600% to 2000%, preferably a range of 600% to 1500 %, a range from 700% to 1400% being more preferred, with a range from 650% to 950% being most preferred.
(B) A low heat seal initiation temperature ("H.S.I.T."), in the range from 90°C to 150°C, preferably a range from 100°C to 145°C, with a range from 105°C to 140°C being more preferred. The H.S.I.T. is determined by sealing a 1 mil film sample at 101kPa (147psi) for about one second at a given temperature using a Sentinel Model 12-12A heat sealer with a 3mm (1/8 inch) wide heater bar. The sealing temperature is increased at 5°C degree intervals until the seal does not separate when a force of approximately 2kg/m (50 gm/in) is applied to the seal (this measurement procedure is identified herein as "H.S.I.T./a") or a force of approximately 20 kg/m (500 g/in) is applied in a peeling mode (this alternate procedure is identified herein as "H.S.I.T./b"). The H.S.I.T. is the minimum temperature at which the film seal does not break under the 2kg/m (50 g/in) load (H.S.I.T./a) or the 20 kg/m (500 g/in) load (H.S.I.T./b).
(C) A hexane extractable content at 50°C, as measured according to 21 C.F.R. §177.1520(c) (3.1 & 3.2), of up to 5.5%, preferably up to 3.5%, up to 2.6% being more preferred, and up to 2.0%being most preferred.
(D) A xylene solubles content at 23°C, as measured according to 21 C.F.R. 177.1520, of up to 13%, preferably up to 6%, with up to 5% being more preferred, and up to 3% being most preferred.
(E) a modulus, as measured according to ASTM D882 (1% secant at 1.3cm/min (0.05 inches/min), of at least 410MPa (60,000 psi), preferably of at least 550MPA (80,000 psi), with at least 690MPa (100,000 psi) being more preferred,
(F) A melting point from 120°C to 155°C, and
(G) A haze, as measured by ASTM D-1003, of up to 6%, with a haze of up to 3% being preferred, a haze of up to 2% being more preferred, and a haze of up to 1.8% being most preferred. Haze is a measure of transparency of the composition of the invention. Haze is measured as the percentage of light transmittance. The presence of various additives such as silica can adversely effect haze-values if the particle size of the silica is larger than the wavelength of the light. Further, the thickness of the film has an effect on the haze value of the film; as film thickness increases, the haze value increases.
(H) A gloss, as measured according to ASTM D-523 (60°C), in the range from 110 to 150, with a gloss in the range from 140 to 150 being preferred, and
(I) A clarity, as measured according to D-1003, in the range from 20 to 80%, with a range from 40 to 75% being preferred and from 50 to 75% being most preferred.

The polymer compositions as described above will have melt flows, as determined by a conventional test procedure such as ASTM-D1238, Cond. L, of from 3 dg/min to 50 dg/min. A melt flow of from 3 dg/min to 25 dg/min being preferred and from 3 dg/min to 20 dg/min being more preferred. Optical properties of the copolymer composition are improved with higher melt flow.

As an alternative embodiment of the invention, the polymer compositions are contacted at elevated temperatures, e.g., above 180°C, with peroxide. The treatment is termed "visbreaking" and the procedures thereof are within the skill of the art and can be used to increase the melt flow of the reactor polymer products as desired.

The visbroken polymer products of this invention are obtained by visbreaking the polymer compositions of the present invention that have a melt flow of at least 0.8 dg/min. The melt flow ratio of the resulting visbroken product to the starting non-visbroken polymer product is at least 2, a melt flow ratio of 5 is preferred, with a melt flow ratio of 8 being more preferred.

The polymer compositions of the invention as well as the visbroken derivatives thereof are characterized by an excellent balance of improved low heat seal initiation temperatures, low hexane extractables, good stiffness and good optical properties, such as low haze, low yellowing and/or low bloom.

According to another embodiment of the invention, the polypropylene random copolymer composition incorporates an additive package comprising from 0.03% to 0.10% by weight of composition tetrakis[methylene(3,5-di-tert-butyl-4-hydroxyhydrocinnamate)]methane, from 0.05% to 0.11% by weight of bis(2,4-di-tert-butylphenyl)pentaerythritol diphosphite, and from 0.01% to 0.04% by weight of magnesium aluminum hydroxy carbonate hydrate.

The polypropylene random copolymer composition of the invention may optionally incorporate other additives such as stabilizers, slip agents such as erucamide, antioxidants, acid acceptors, antiblocking agents such as amorphous silica, nucleating agents, and dispersants.

The compositions of the invention are processed by conventional procedures used for the production of biaxially oriented or monoaxially oriented films, such as casting or film blowing methods. After fabrication, the film can be heat sealed by sealing jaws at a preset temperature, pressure and dwell time. The resulting product, such as polymer packaging film, sheet or container, has a lower heat seal initiation temperature, low hexane extractables and improved optical properties such as low haze and low yellowing. Unlike typical polymer film made of random polypropylene copolymers containing ethylene as the comonomer, the butene random copolymers of the invention exhibit low to no blooming after aging at room temperature.

Selection of the butene content to be incorporated into the random copolymer of the invention and selection of the melt flow of the copolymer for desired applications is within the skill of the art.

The compositions of the invention are processed by conventional procedures used for thermoplastic materials such as extrusion, injection molding, thermoforming and related processes. Among particular applications for the compositions are the production of oriented or unoriented films by casting or film blowing methods. After fabrication, the film can be heat sealed by sealing jaws at a preset temperature, pressure and dwell time. The resulting film has lower heat seal initiation temperatures, low hexane, extractables and improved optical properties such as low haze, i.e., good transparency.

The invention described herein is illustrated, but not limited by the following Illustrative Embodiments and Comparative Examples. The following terms are used throughout the Illustrative Embodiments and Comparative Examples:
SCA (Selectivity Control Agent)
NPTMS (n-propyltrimethoxysilane)
DIBDMS (Diisobutyldimethoxysilane)
PEEB (ethyl p-ethoxybenzoate)

### Illustrative Embodiment I

### A. Preparation of Procatalyst No. 1

To a solution of 70 milliliters of titanium tetrachloride (120 grams, 0.64 mol) in 3.7 liters of chlorobenzene are added, in succession, 180 milliliters of diisobutyl phthalate (187 grams, 0.67 mol), 590 grams (5.2 mols) of magnesium diethoxide, and a solution of 4.7 liters of titanium tetrachloride (8100 grams, 43 mols) in 1.2 liters of chlorobenzene. A temperature of 20°C to 25°C is maintained during these additions. The resulting mixture is then heated to 110°C with stirring, the temperature being maintained for 1 hour. At the end of this time, the mixture is filtered while hot. A solid material is collected.

The solid material is then slurried in a solution of 4.7 liters of titanium tetrachloride (8100 grams, 43 mols) in 1.2 liters of chlorobenzene at room temperature. A solution of 45 grams (0.22 mol) of phthaloyl dichloride in 3.7 liters of chlorobenzene is added to the slurry at room temperature and the resulting slurry is then heated to 110°C with stirring, the temperature being maintained for 30 minutes. At the end of this time, the mixture is filtered while hot. A solid material is collected.

The solid material is reslurried in a solution of 4.7 liters of titanium tetrachloride (8100 grams, 43 mols) in 1.2 liters of chlorobenzene at room temperature. An additional 3.7 liters of chlorobenzene is then added to the slurry at room temperature, and the resulting slurry is heated to 110°C with stirring, the temperature being maintained in 30 minutes. At the end of this time, the mixture is filtered while hot. A solid material is collected.

The solid material is reslurried once again in a solution of 4.7 liters of titanium tetrachloride (8100 grams, 43 mols) in 1.2 liters of chlorobenzene at room temperature. An additional 3.2 liters of chlorobenzene is then added to the slurry at room temperature, and the resulting slurry is heated to 110°C with stirring, the temperature being maintained for 30 minutes. At the end of this time, the mixture is filtered while hot. The residue is washed 6 times with 500 milliliter portions of hexane at 25°C and then dried under a nitrogen purge. The product weighs about 500 grams.

### B. Preparation of Procatalyst No. 2

To a 50/50 solution (vol/vol) of 3558 liters of titanium tetrachloride and chlorobenzene, are added, in succession, 51 kg of diisobutyl phthalate, and 150 kg of magnesium diethoxide. A temperature of 20°C to 25°C is maintained during these additions. The resulting mixture is then heated to 110°C with stirring, the temperature being maintained for 1 hour. At the end of this time, the mixture is filtered while hot. A solid material is collected.

The solid material is then slurried in a 50/50 (vol/vol) solution of 3558 liters of titanium tetrachloride and chlorobenzene at room temperature. The resulting slurry is then heated to 110°C with stirring, the temperature being maintained for 60 minutes. At the end of this time, the mixture is filtered while hot. A solid material is collected.

The solid material is reslurried in 3558 liters of the 50/50 (vol/vol) solution. The resulting slurry is heated to 110°C with stirring and the temperature being maintained in 30 minutes. At the end of this time, the mixture is filtered while hot. A solid material is collected.

The residue is washed 4 times with 3785 liter portions of isopentane at 25°C and then dried under a nitrogen purge.

### C. Preparation of Procatalyst No. 3

To a 50/50 solution (vol/vol) of 2953 liters of titanium tetrachloride and chlorobenzene, are added, in succession, 50 kg of diisobutyl phthalate, and 231 kg of carbonized magnesium ethoxide. A temperature of 20°C to 25°C is maintained during these additions. The resulting mixture is then heated to 110°C with stirring, the temperature being maintained for 1 hour. At the end of this time, the mixture is filtered while hot. A solid material is collected.

The solid material is then slurried in a 50/509 (vol/vol) solution of 2953 liters of titanium tetrachloride and chlorobenzene at room temperature. The resulting slurry is then heated to 110°C with stirring, the temperature being maintained for 60 minutes. At the end of this time, the mixture is filtered while hot. A solid material is collected.

The solid material is reslurried in 2953 liters of the 50/50 (vol/vol) solution. The resulting slurry is heated to 110°C with stirring and the temperature being maintained in 30 minutes. At the end of this time, the mixture is filtered while hot. A solid material is collected.

The residue is washed once with 2271 liters of isopentane at 25°C and then dried under a nitrogen purge.

### D. Polymerization

The procatalyst of sections A, B, or C were continuously fed into a fluidized bed reactor as a 30% by weight dispersion in mineral oil. Simultaneously and continuously, triethylaluminum, as a 5% by weight solution in isopentane and a selectivity control agent ("SCA" = NPTMS or DIBDMS) as a 0.5 to 5 percent solution in isopentane, were introduced to the reactor. Sufficient hydrogen was introduced to regulate the molecular weight of the polymer product. A small amount of nitrogen is also present. The partial pressure of propylene was from 2.3MPa (330 psi) to 2.6MPa (380 psi). The polymerization temperature was 65°C and the residence time was 1.5-2 hours. The reactor products were recovered by conventional means.

### Illustrative Embodiment II

### A. Film Casting of Polymer Product

Some of the polymer reactor products, produced according to Illustrative Embodiments I, were recovered by conventional means. Some of the recovered reactor products (propylene/butene-1 random copolymer with about 7% by weight butene-1 and melt flow of 3.4, as measured by ASTM D-1238 Cond. L) were mixed and pelletized with a base additive package of Irganox® 1010 (500 ppm), Ultranox® 626 (800 ppm), Hydrotalcite DHT-4A (200 ppm) and one of the following candidate agents:
1) Hoechst® PP wax 230 which is a polypropylene wax available from Hoechst Celanese,
2) Millad® 3905 nucleating agent available from Milliken Chemicals,
3) Millad® 3940 nucleating agent available from Milliken,
4) Millad® 3988 nucleating agent which is an unsymmetrical sorbitol derivative available from Milliken,
5) Mark® 2180 nucleating agent available from Witco Corporation,
6) Calcium montanate available from Hoechst Celanese, as Hostalub VP® CAW2,
7) Polywax® 3000 T6 which is a polyethylene wax available from Petrolite Corporation,
8) Vantalc® 6H talc available from R. T. Vanderbilt Company,
9) GP638R graphite available from Union Carbide, or
10) NC-4 which is available from Mitsui Toatsu Chemicals.

The pellets were extruded into 5 mil thick cast film using a 19mm (3/4 inch) Brabender extruder (200°C melt temperature) with 2dm (8 inch) wide die and Killion chill roll (15°C). operating conditions for all polymer blends were the same.

Crystallization temperature (Tc) was measured using a Perkin Elmer Series 7 Differential Scanning Calorimeter Thermal Analysis System. The polymer was melted at 220°C and then cooled at 10°C/minute. The exothermic peak temperature was recorded as the Tc.

The test results for the films produced are provided in Tables 1 and 2.

**Table 1**

| | PPM Level² | | | | |
|---|---|---|---|---|---|
| | 0 | 1000 | 2000 | 3500 | 5000 |
| AGENT | % Haze | | | | |
| Millad® 3905 | 8.7 | 3.7 | 3.8 | 4.8 | -- |
| Millad® 3940 | 8.7 | 2.4 | 2.3 | 2 | -- |
| Mark® 2180 | 8.7 | 7.7 | 8.2 | 10.3 | -- |
| NC4 | 8.7 | 1.8 | 3 | 2.7 | -- |
| Millad® 3988 | 8.7 | 3.3 | 2.7 | 1.6 | -- |
| Ca Montanate | 8.7 | 1.7 | 1.7 | -- | 1.7 |
| PP wax³ | 8.7 | 1.7 | 1.6 | -- | 1.6 |
| Na Benzoate | 8.7 | 16.6 | 16.4 | 24.4 | -- |
| PEWAY⁴ | 8.7 | 5.8 | 8.9 | -- | 5.3 |
| Vantalc 6H | 8.7 | 15.9 | 17.1 | -- | 20.5 |
| Graphite (GP638R) | 8.7 | 15.0 | 21.4 | -- | -- |

| | | | | | |
|---|---|---|---|---|---|
| ¹Table 1 presents % haze data as a function of the agent. ²Parts per million of agent used in polymer composition. | | | | | |
| ³Polypropylene wax | | | | | |
| ⁴Polyethylene wax | | | | | |

As noted in Table 1, the presence of sodium benzoate, talc or graphite tends to increase the haze (i.e., lower the transparency) of propylene-butene random copolymer.

**Table 2**

| | PPM LEVEL | | | | |
|---|---|---|---|---|---|
| | 0 | 1000 | 2000 | 3500 | 5000 |
| AGENT | Crystallization Temperature, °C | | | | |
| Millad® 3905 | 103.8 | 103.8 | 112.3 | 112.0 | -- |
| Millad® 3940 | 103.8 | 111.0 | 115.8 | 116.0 | -- |
| Mark® 2180 | 103.8 | 115.7 | 116.3 | 117.1 | -- |
| NC-4 | 103.8 | 107.6 | 116.6 | 117.1 | -- |
| Millad® 3988 | 103.8 | 112.8 | 116.4 | 117.4 | -- |
| Ca Montanate | 103.8 | 103.95 | 103.95 | -- | 103.1 |
| PP Wax² | 103.8 | 106.0 | 104.5 | -- | 103.8 |
| Na benzoate | 103.8 | 114.1 | 115.9 | 115.3 | -- |
| PE Wax³ | 103.8 | 102.3 | 103.3 | -- | 103.3 |
| Vantalc® 6H | 103.8 | 110.7 | 108.8 | -- | 108.2 |
| Graphite (GP638R) | 103.8 | 107.1 | 108.4 | -- | 109.8 |

| | | | | | |
|---|---|---|---|---|---|
| ¹Crystallization temperature (T_{c}) of propylene-butene random copolymer as a function of parts per million (PPM) level of agent in composition. ²Polypropylene wax | | | | | |
| ³Polyethylene wax | | | | | |

As presented in Table 2, calcium montanate, polypropylene wax and polyethylene wax generally did not nucleate the propylene-butene random copolymer.

### B. Film Casting of Polymer Products

Some of the polypropylene products, produced according to Illustrative Embodiment I and Comparative Examples I and II, were recovered by conventional means. Some of the recovered products were mixed with one of the following additives packages:
1) 1000 ppm of Irganox® 1010 hindered phenolic primary antioxidant available from Ciba Geigy Corporation, 1000 ppm of Irgafos® 168 phosphite secondary antioxidant available from Ciba Geigy Corporation, 400 ppm of Hydrotalcite DHT-4A acid neutralizer available from Kyowa Chemical Industry.
2) 500 ppm of Irganox® 1010, 800 ppm of Ultranox® 626 secondary phosphite stabilizer available from General Electric Specialty Chemicals and 200 ppm of Hydrotalcite DHT-4A.
3) 1000 ppm of Irganox® 1010, 1000 ppm of Irgafos® 168, 400 ppm of Hydrotalcite DHT 4A and 2000 ppm of Sylobloc® 250 which is a 1:1 by weight combination of amorphous silica and erucamide available from W.R. Grace.
4) 1000 ppm of Irganox® 1010, 1000 ppm of Irgafos® 168, and 500 ppm of Hydrotalcite DHT 4A.

After the recovered products were mixed with one of the above-described additive packages, the resultant mixture was visbroken with sufficient peroxide to obtain the desired melt flow product.

The visbroken polymer product pellets were cast into film according to one of the following procedures:
i. The pellets were extruded into 120µm (0.005 inch) thick cast film using an 8.9 cm (3½ inch) diameter extruder (30:1 L/D ratio; 260°C melt temperature; speed of about 67 RPM; and head pressure of 16 MPa (2300 psi)), a 1.08m (42.5 inch) wide die, and 71 cm (18 inch) diameter chill roll (24°C).
ii. The pellets were extruded into cast films of various thickness using an 11cm (4½ inch) diameter extruder (30:1 L/D ratio; 264°C melt temperature; head pressure of 21 MPa (3000 psi)), 1.9m (75 inch) wide die and a 61cm (24 inch) diameter chill roll.
iii. Pellets were extruded into 100µm (0.004 inch) thick cast film using a 1.9cm (3/4 inch) diameter Brabender extruder (24:1 L/D ratio; extruder speed of 67 RPM; melt temperature of 248°C; and head pressure of 3MPa (500 psi)), a 20 cm (8 inch) wide die and a 25 cm (10 inch) diameter chill roll (25°C).
iv. Pellets were extruded into a 25 µm (0.001 inch) thick cast film using a 1.9 cm (3/4 inch) diameter extruder (25:1 L/D ratio) with a 20 cm (8 inch) wide die and a 25 cm (10 inch) diameter chill roll.

The "melt point" (°C) is obtained from a differential scanning calorimetry curve for each polymer product produced.

The other properties of the random copolymer composition were measured as follows:

| | |
|---|---|
| Elongation (%) | D-882 |
| Melt Flow | ASTM D1238.78 Cond. L |
| Haze | ASTM D1003 |
| Gloss (at 60°) | ASTM D523 |
| Modulus (1% secant at 1.3mm/min (0.05 inches/min)) | ASTM D882 |
| Tensile Strength at Break | ASTM D882 |

The results of a series of polymerizations are shown in Tables 3, 4, and 5.

### Comparative Example I

The same procedures used in Illustrative Embodiment (ID) were repeated except ethylene was substituted for butene-1. The results of a series of polymerizations are shown in Tables 3, 4, and 5.

### Comparative Example II

### A. Preparation of Procatalyst Component

The procatalyst was prepared by adding 200 kg magnesium diethoxide (50 mmol) to 4164 liters of a 50/50 (vol/vol) mixture of chlorobenzene/TiCl₄. After adding 88 kg of ethyl benzoate, the mixture was heated and stirred at 96°C for approximately 30 minutes, the mixture was then filtered. The filtrate was reslurried with 4164 liters of the 50/50 (vol/vol) mixture of titanium tetrachloride and chlorobenzene and then heated to 96°C with stirring. The temperature was maintained for 10 minutes. At the end of this time, the mixture was filtered hot.

The filtrate is reslurried in 4164 liters of the 50/50 mixture and 21 liters of benzoyl chloride. The resulting slurry is heated to 96°C with stirring for about 10 minutes. The mixture is filtered while hot.

The residue is washed four times with 5106 liter portions of isopentane at 25°C and then dried under a nitrogen purge.

### B. Polymerization

Using the above-described procatalyst (section A), propylene and butene were polymerized, in the same manner, as described in Illustrative Embodiment I(D), except the selectivity control agent was PEEB.

The resulting copolymer products were cast into films of various thickness using the procedures as described in Illustrative Embodiment II(B). The results are furnished in Tables 4 and 6.

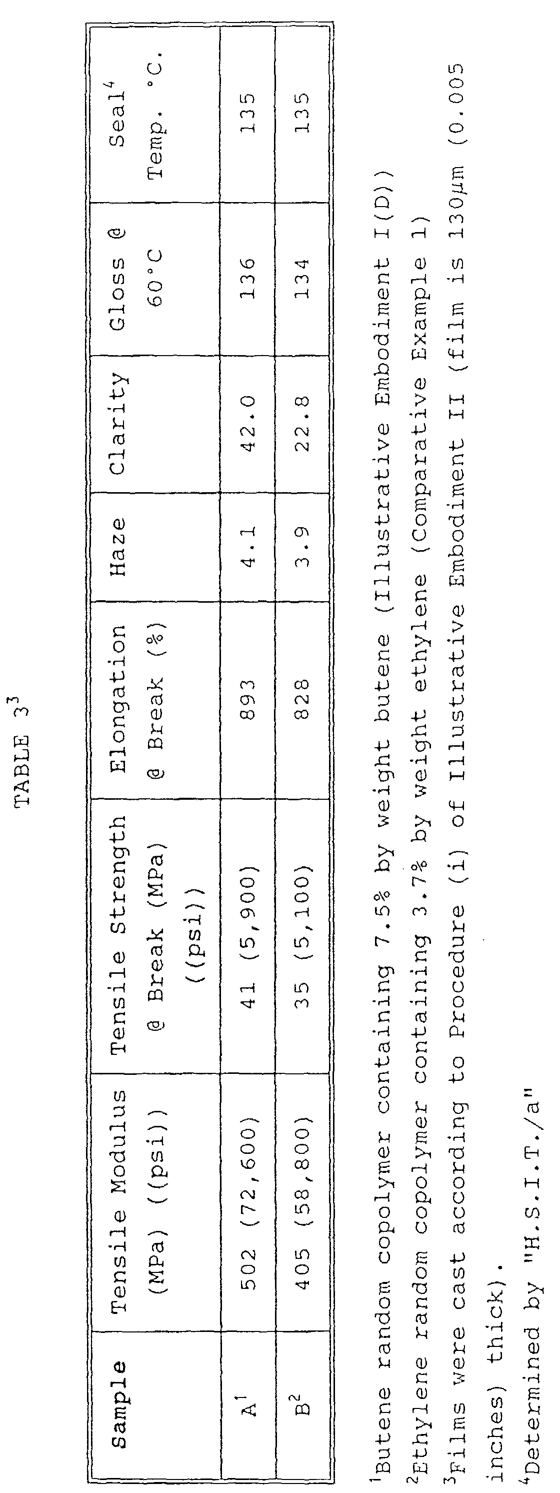

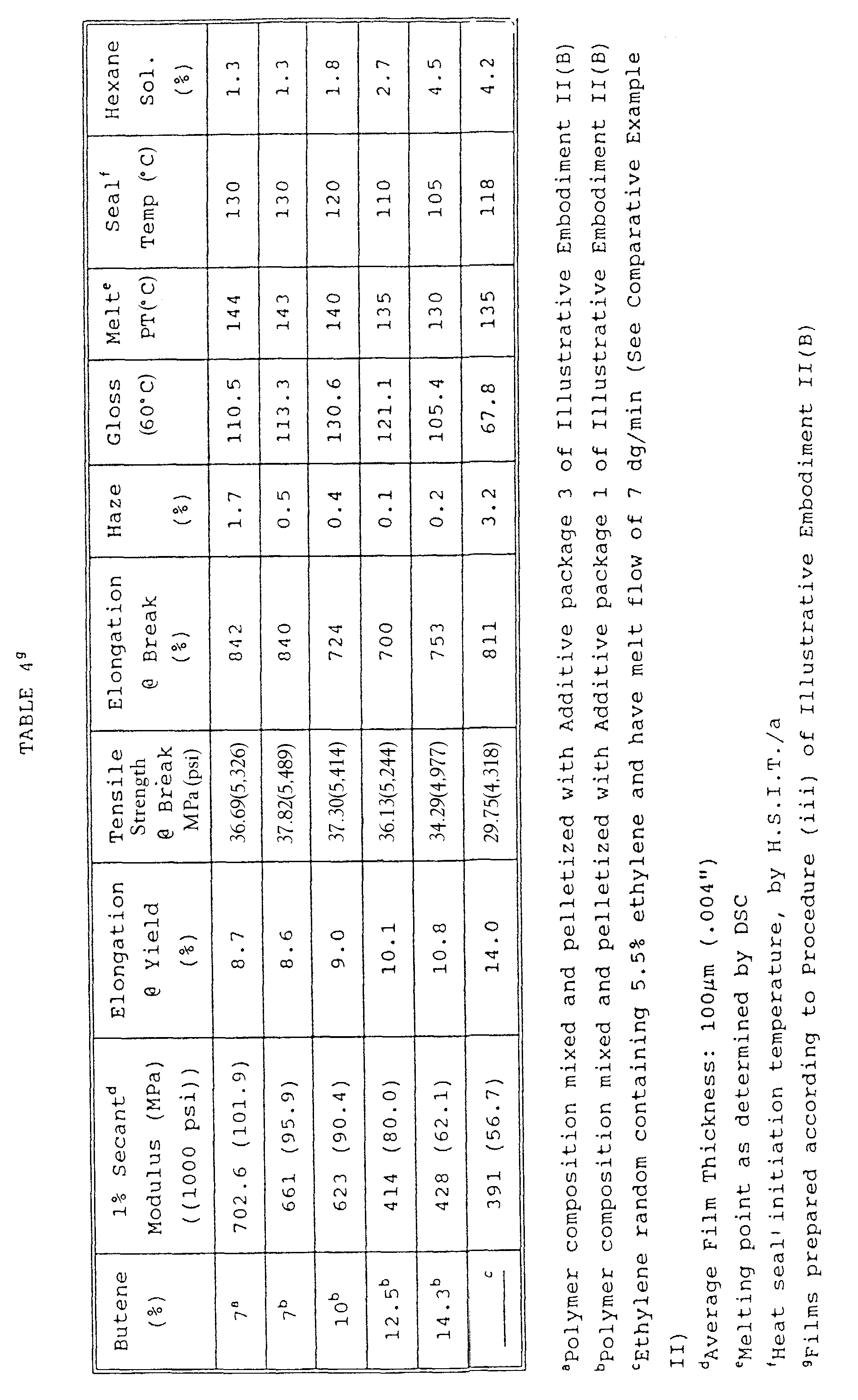

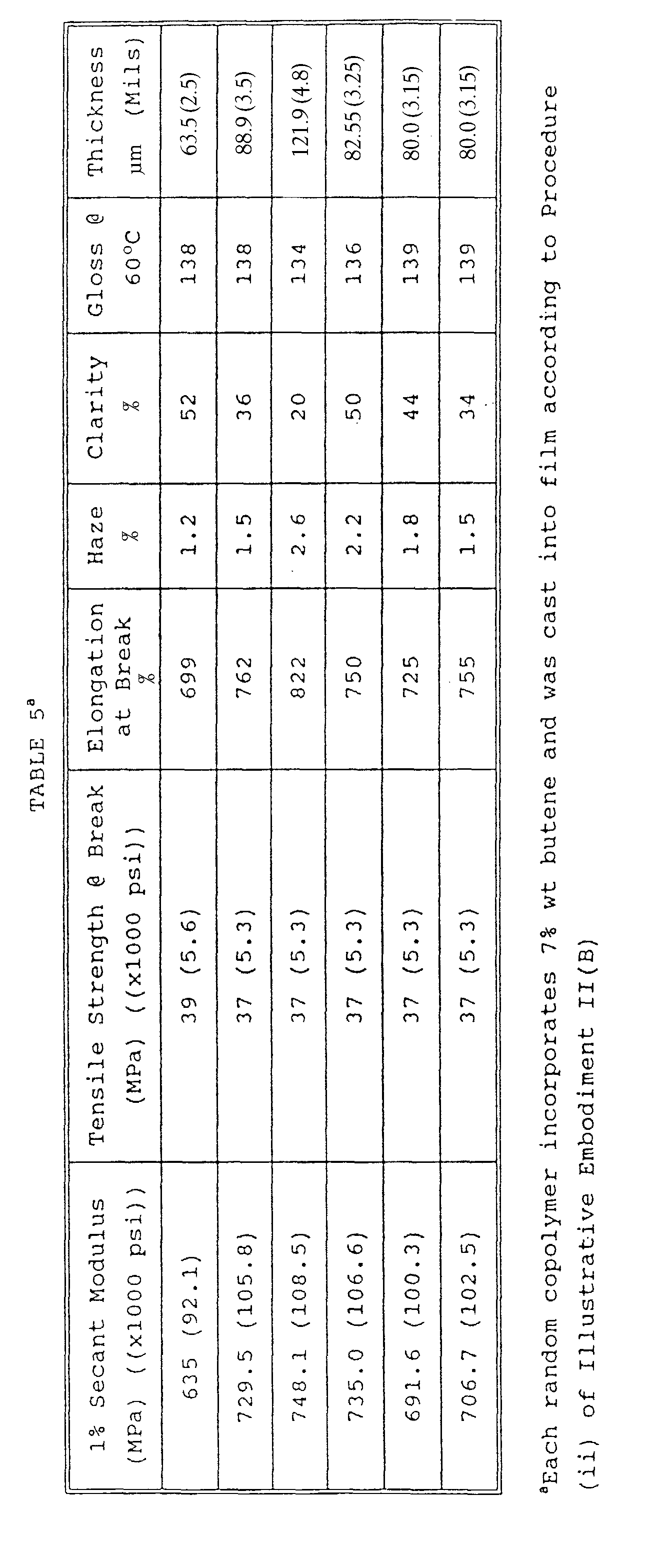

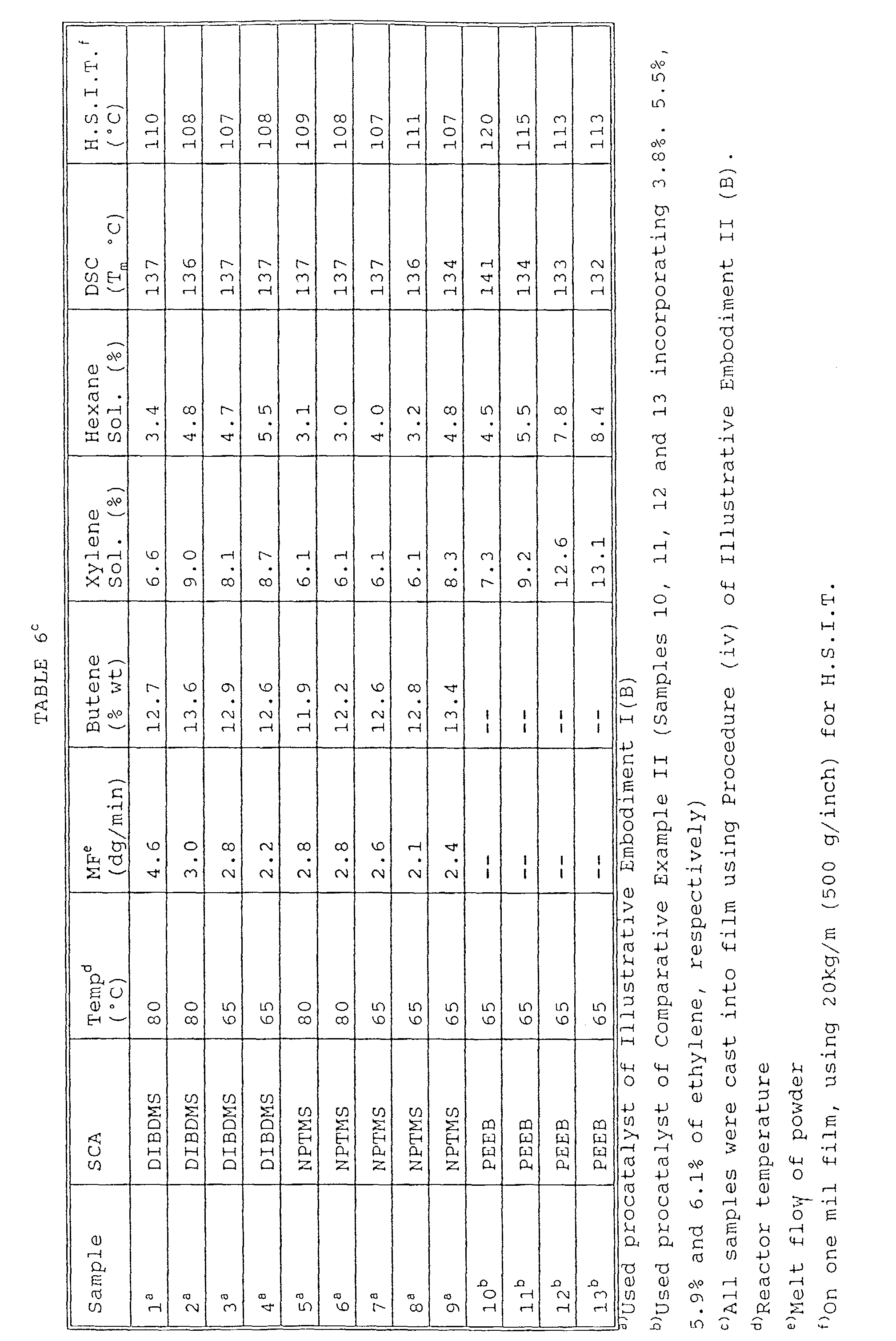

### Illustrative Embodiment III

Cast films were extruded from random copolymer compositions containing 7% by weight butene and additive package (1) or additive package (2) (see Illustrative Embodiment II(B)). The rolls of film were stored at 21°C. After two week in storage, the ends of each roll were visually inspected for color using a rating scale of 1 to 5 (where 1 represents no yellowing present and 5 represents extreme or high yellowing). The visual ratings of film rolls from the two formulations were as follows.

**TABLE 7**

| | Color Rating |
|---|---|
| Film w/formulation (1) | 4 |
| Film w/formulation (2) | 1.5 |

## Claims

1. A copolymer composition comprising (a) a random copolymer of 0.8% to 20% by weight of butene-1 and 80% to 99.2% by weight of propylene (b) at least one additive, and (c) a clarifying agent which is calcium montanate, at least one polyolefin wax having a viscosity of from 500 mPa-seconds to 2500 mPa-seconds at 170°C or a combination thereof, which composition has an ASTM-D1238, Cond. L. melt flow of from 3 dg/min to 50 dg/min.

2. A polymer composition as claimed in claim 1 wherein the additive (b) is an antioxidant, process stabiliser, ultraviolet absorber, dispersant, or an acid neutralising agent.

3. A polymer composition as claimed in claim 1 or claim 2 wherein the clarifying agent is calcium montanate, which is included in the composition in an amount of from 0.02% to 1.2% by weight.

4. A polymer composition as claimed in claim 1 or claim 2 wherein the clarifying agent is a polypropylene wax, polyethylene wax or a combination thereof.

5. A polymer composition as claimed in claim 2 wherein the additive (b) comprises tetrakis[methylene (3,5-di-tert-butyl-4-hydroxy hydrocinnamate)]methane, bis (2,4-di-tert-butylphenyl)-pentaerythritol diphosphite or magnesium aluminium hydroxycarbonate-hydrate, and the clarifying agent is calcium montanate in an amount from 0.02% to 1.2% by weight of the polymer composition.

6. A polymer composition as claimed in any one of the preceding claims wherein the random copolymer (a) comprises from 5 to 15% by weight of butene-1 and from 85 to 95% by weight of propylene.

7. A polymer composition as claimed in claim 6 wherein the random copolymer (a) has
(a) an ASTM D882 elongation at break in the range from 600% to 2000%,
(b) a heat seal initiation temperature, for a 25.4 micrometre (1 mil) film sample sealed at 101kPa for about one second using a Sentinel Model 12-12A heat sealer with a 3mm (⅛ inch) wide bar, in the range from 105°C to 140°C,
(c) a 21 C.F.R. 177.1520 (c) (3.1&3.2) hexane extractable content at 50°C, of up to 5.5%, and
(d) an ASTM D-1003 haze of up to 6%.

8. A polymer composition as claimed in claim 7 wherein the random copolymer (a) additionally has
(e) a 21 C.F.R. 177.1520 xylene solubles content at 23°C of up to 13%; and
(f) an ASTM D882 modulus (1% secant measured at 1.3mm (0.05 inches) per minute) of at least 410 mPa (60,000 psi).

9. A room temperature aged, heat sealable packaging film or sheet obtained from a polymer composition as claimed in any one of claims 1 to 8.

10. A polymer composition comprising a random copolymer or from 5 to 15% by weight of butene-1 and from 85 to 95% by weight of propylene, the said composition having:
(a) an ASTM D882 elongation at break in the range from 600% to 2000%,
(b) a heat seal initiation temperature, for a 25.4 micrometre (1 mil) film sample sealed at 101kPa for about one second using a Sentinel Model 12-12A heat sealer with a 3mm (⅛ inch) wide bar, in the range from 105°C to 140°C,
(c) a 21 C.F.R. 177.1520 (c) (3.1&3.2) hexane extractable content at 50°C, of up to 5.5%, and
(d) an ASTM D-1003 haze of up to 2%;
the said composition being obtainable by including therein (1) at least one additive and (2) at least one clarifying agent which is calcium montanate, a polyolefin wax having a viscosity of from 500 mPa - seconds to 2000 mPa-second at 170°C, or a combination thereof.

11. A polymer composition as claimed in claim 10 wherein the random copolymer comprises from 6 to 13% by weight of butene-1 and from 87 to 94% by weight of propylene.

12. A polymer composition as claimed in claim 10 which additionally has
(e) a 21 C.F.R. 177.1520 xylene solubles content at 23°C of up to 13%; and
(f) an ASTM D882 modulus (1% secant measured at 1.3mm (0.05 inches) per minute) of at least 410 mPa (60,000 psi).

13. A process for preparing a polymer composition comprising a random copolymer of from 5 to 15% by weight of butene-1 and from 85 to 95% by weight of propylene, the said composition having
(a) an ASTM D882 elongation at break in the range from 600% to 2000%,
(b) a heat seal initiation temperature, for a 25.4 micrometre (1 mil) film sample sealed at 101kPa for about one second using a Sentinel Model 12-12A heat sealer with a 3mm (⅛ inch) wide bar, in the range from 105°C to 140°C,
(c) a 21 C.F.R. 177.1520 (c) (3.1&3.2) hexane extractable content at 50°C, of up to 5.5%, and
(d) an ASTM D-1003 haze of up to 2%;
which process comprises copolymerising propylene and butene-1 to form a copolymer comprising 5% to 15% by weight of butene-1 and 85% to 95% by weight of propylene, and adding to the said copolymer (1) at least one additive and (2) at least one clarifying agent which is calcium montanate, a polyolefin wax having a viscosity of from 500 mPa-seconds at 170°C to 2500 mPa-seconds at 170°C, or a combination thereof.

14. A process as claimed in claim 13 wherein the polymer composition additionally has
(e) a 21 C.F.R. 177.1520 xylene solubles content at 23°C of up to 13%; and
(f) an ASTM D882 modulus (1% secant measured at 1.3mm (0.05 inches) per minute) of at least 410 mPa (60,000 psi).

15. A process as claimed in claim 13 wherein the polymerization is carried out with a magnesium, titanium-containing catalyst system comprising
(a) a titanium, magnesium-containing procatalyst obtained by contacting a magnesium compound, a tetravalent titanium halide and an electron donor optionally in the presence of an inert diluent,
(b) an organoaluminium cocatalyst, and (c) an organosilane selectivity control agent,

16. A visbroken polymer composition which is prepared by contacting a polymer composition as claimed in any one of claims 1 to 8, or 10 to 12 which has a melt flow of at least 0.8 dg/min with peroxide at an elevated temperature, such that the melt flow ratio of the visbroken product to the starting non-visbroken composition is at least 2.0.

## Patentansprüche

1. Copolymer-Zusammensetzung umfassend (a) ein statistisches Copolymer von 0,8 bis 20 Gew.-% Buten-1 und 80 bis 99,2 Gew.-% Propylen, (b) mindestens ein Additiv, und (c) einen Transparenzverstärker, bei welchem es sich um Calciummontanat, mindestens ein Polyolefin-Wachs mit einer Viskosität bei 170°C von 500 mPa.s bis 2500 mPa.s oder eine Kombination derselben handelt, welche Zusammensetzung einen Schmelzfluß gemäß ASTM-D1238, Bed. L von 3 dg/Min. bis 50 dg/Min. aufweist.

2. Polymer-Zusammensetzung nach Anspruch 1, worin das Additiv (b) ein Antioxidationsmittel, Verarbeitungsstabilisator, UV-Absorptionsmittel, Dispergiermittel oder ein Säure-Neutralisationsmittel ist.

3. Polymer-Zusammensetzung nach Anspruch 1 oder Anspruch 2, worin der Transparenzverstärker Calciummontanat ist, welches in der Zusammensetzung in einer Menge von 0,02 bis 1,2 Gew.-% enthalten ist.

4. Polymer-Zusammensetzung nach Anspruch 1 oder Anspruch 2, worin der Transparenzverstärker ein Polypropylen-Wachs, Polyethylen-Wachs oder eine Kombination derselben ist.

5. Polymer-Zusammensetzung nach Anspruch 2, worin das Additiv (b) Tetrakis[methylen(3,5-di-tert-butyl-4-hydroxyhydrocinnamat)]methan, Bis(2,4-di-tert-butylphenyl)pentaerythritdiphosphit oder Magnesiumaluminiumhydroxycarbonathydrat umfaßt und der Transparenzverstärker Calciummontanat in einer Menge von 0,02 bis 1,2 Gew.-% der Polymer-Zusammensetzung ist.

6. Polymer-Zusammensetzung nach irgendeinem der vorhergehenden Ansprüche, worin das statistische Copolymer (a) 5 bis 15 Gew.-% Buten-1 und 85 bis 95 Gew.-% Propylen umfaßt.

7. Polymer-Zusammensetzung nach Anspruch 6, worin das statistische Copolymer (a)
(a) eine Bruchdehnung gemäß ASTM D882 im Bereich von 600% bis 2000%,
(b) eine Heißsiegel-Einleitungstemperatur, für eine bei 101 kPA etwa 1 Sekunde lang unter Verwendung eines Sentinel-Heißsiegelapparats Modell 12-12A mit einer 3 mm (1/8 Zoll) breiten Stange versiegelte 25,4 µm (1 Mil) Folienprobe, im Bereich von 105°C bis 140°C,
(c) einen Gehalt an bei 50°C mit Hexan extrahierbaren Stoffen gemäß 21 CFR 177.1520 (c) (3.1&3.2) von bis zu 55%, und
(d) eine Trübung gemäß ASTM D-1003 von bis zu 6% aufweist.

8. Polymer-Zusammensetzung nach Anspruch 7, worin das statistische Copolymer (a) zusätzlich
(e) einen Gehalt an bei 23°C in Xylol löslichen Stoffen gemäß 21 CFR 177.1520 von bis zu 13%, und
(f) einen Modul gemäß ASTM D882 (1% Sekante, gemessen bei 1,3 mm (0,05 Zoll) pro Minute) von mindestens 41 mPa (60000 psi) aufweist.

9. Bei Raumtemperatur gealterte, heißsiegelbare Verpackungsfolie oder -dünnfolie, erhalten aus einer Polymer-Zusammensetzung nach irgendeinem der Ansprüche 1 bis 8.

10. Polymer-Zusammensetzung umfassend ein statistisches Copolymer von 5 bis 15 Gew.-% Buten-1 und 85 bis 95 Gew.-% Propylen, wobei die Zusammensetzung:
(a) eine Bruchdehnung gemäß ASTM D882 im Bereich von 600% bis 2000%,
(b) eine Heißsiegel-Einleitungstemperatur, für eine bei 101 kPa etwa eine Sekunde lang unter Verwendung eines Sentinel-Heißsiegelapparats Modell 12-12A mit einer 3 mm (1/8 Zoll) breiten Stange versiegelte 25,4 µm (1 Mil) Folienprobe, im Bereich von 105°C bis 140°C,
(c) einen Gehalt an bei 50°C mit Hexan extrahierbaren Stoffen gemäß 21 CFR 177.1520 (c) (3.1&3.2), von bis zu 5,5%, und
(d) eine Trübung gemäß ASTM D-1003 von bis zu 2% aufweist, wobei die Zusammensetzung erhältlich ist durch Einschluß darin von (1) mindestens einem Additiv und (2) mindestens einem Transparenzverstärker bei welchem es sich um Calciummontanat, ein Polyolefin-Wachs mit einer Viskosität bei 170°C von 500 mPa.s bis 2000 mPa.s oder eine Kombination derselben handelt.

11. Polymer-Zusammensetzung nach Anspruch 10, worin das statistische Copolymer umfaßt 6 bis 13 Gew.-% Buten-1 und 87 bis 94 Gew.-% Propylen.

12. Polymer-Zusammensetzung nach Anspruch 10, welche zusätzlich
(e) einen Gehalt an bei 23°C in Xylol löslichen Stoffen gemäß 21 CFR 177.1520 von bis zu 13%, und
(f) einen Modul gemäß ASTM D882 (1% Sekante, gemessen bei 1,3 mm (0,05 Zoll) pro Minute) von mindestens 41 mPa (60000 psi) aufweist.

13. Verfahren zur Herstellung einer Polymer-Zusammensetzung umfassend eine statistisches Copolymer von 5 bis 15 Gew.-% Buten-1 und und 85 bis 95 Gew -% Propylen, wobei die Zusammensetzung
(a) eine Bruchdehnung gemäß ASTM D882 im Bereich von 600% bis 2000%,
(b) eine Heißsiegel-Einleitungstemperatur, für eine bei 101 kPa etwa 1 Sekunde lang unter Verwendung eines Sentinel-Heißsiegelapparats Modell 12-12A mit einer 3 mm (1/8 Zoll) breiten Stange versiegelte 25,4 µm (1 Mil) Folienprobe, im Bereich von 105°C bis 140°C,
(c) einen Gehalt an bei 50°C mit Hexan extrahierbaren Stoffen gemäß 21 CFR 177.1520 (c) (3.1&3.2) von bis zu 5,5%, und
(d) eine Trübung gemäß ASTM D-1003 von bis zu 2% aufweist;
welches Verfahren umfaßt die Copolymerisation von Propylen und Buten-1 unter Bildung eines Copolymers umfassend 5 bis 15 Gew.-% Buten-1 und 85 bis 95 Gew.-% Propylen, und die Zugabe zu dem Copolymer von (1) mindestens einem Additiv und (2) mindestens einem Transparenzverstärker, bei welchem es sich um Calciummontanat, ein Polyolefin-Wachs mit einer Viskosität bei 170°C von 500 mPa.s bis 2500 mPa.s oder eine Kombination derselben handelt.

14. Verfahren nach Anspruch 13, worin die Polymer-Zusammensetzung zusätzlich
(e) einen Gehalt an bei 23°C in Xylol löslichen Stoffen gemäß 21 CFR 177.1520 von bis zu 13%; und
(f) einen Modul gemäß ASTM D882 (1% Sekante, gemessen bei 1,3 mm (0,05 Zoll) pro Minute) von mindestens 41 mPa (60000 psi) aufweist.

15. Verfahren nach Anspruch 13, worin die Polymerisation mit einem Magnesium-, Titan-haltigen Katalysatorsystem durchgeführt wird, welches (a) einen Titan-, Magnesium-haltigen Prokatalysator, erhalten durch Kontaktieren einer Magnesium-Verbindung, eines vierwertigen Titanhalogenids und eines Elektronendonors, gegebenenfalls in Gegenwart eines inerten Verdünnungsmittels, (b) einen Organoaluminium-Cokatalysator, und (c) ein Organosilan-Selektivitätssteuerungsmittel umfaßt.

16. Polymer-Zusammensetzung mit herabgesetzter Viskosität, welche hergestellt wird durch Kontaktieren einer Polymer-Zusammensetzung nach irgendeinem der Ansprüche 1 bis 8 oder 10 bis 12, welche einen Schmelzfluß von mindestens 0,8 dg/Min. aufweist, mit Peroxid bei einer erhöhten Temperatur, so daß das Schmelzflußverhältnis des Produkts mit herabgesetzter Viskostät zu der Ausgangszusammensetzung mit nicht herabgesetzter Vikosität mindestens 2,0 beträgt.

## Revendications

1. Composition copolymérique comprenant (a) un copolymère statistique de 0,8 % à 20 % en poids du butène-1 et de 80 à 99,2 % en poids de propylène, (b) au moins un additif, et (c) un agent clarifiant qui consiste en montanate de calcium, au moins une cire polyoléfinique ayant une viscosité comprise dans l'intervalle de 500 mPa.s à 2500 mPa.s à 170°C ou de leurs associations, composition qui a un indice d'écoulement en masse fondue, suivant la norme ASTM-D1238, condition L., de 3 dg/min à 50 dg/min.

2. Composition polymérique suivant la revendication 1, dans laquelle l'additif (b) est un anti-oxydant, un stabilisant de traitement, un agent absorbant le rayonnement ultraviolet, un dispersant ou un agent de neutralisation d'acidité.

3. Composition polymérique suivant la revendication 1 ou la revendication 2, dans laquelle l'agent clarifiant consiste en montanate de calcium, qui est incorporé à la composition en une quantité de 0,02 % à 1,2 % en poids.

4. Composition polymérique suivant la revendication 1 ou la revendication 2, dans laquelle l'agent clarifiant consiste en une cire de polypropylène, une cire de polyéthylène ou une de leurs associations.

5. Composition polymérique suivant la revendication 2, dans laquelle l'additif (b) comprend le tétrakis[méthylène(3,5-di-tertio-butyl-4-hydroxy-hydrocinnamate)]méthane, le diphosphite de bis(2,4-di-tertio-butylphényl)pentaérythritol ou l'hydrate d'hydroxycarbonate de magnésium et d'aluminium, et l'agent clarifiant consiste en montanate de calcium en une quantité de 0,02 % à 1,2 % en poids de la composition polymérique.

6. Composition polymérique suivant l'une quelconque des revendications précédentes, dans laquelle le copolymère statistique (a) comprend 5 à 15 % en poid de butène-1 et 85 à 95 % en poids de propylène.

7. Composition polymérique suivant la revendication 6, dans laquelle le copolymère statistique (a) a
(a) un allongement à la rupture, suivant la norme ASTM D882, compris dans l'intervalle de 600 % à 2000 %,
(b) une température de déclenchement de thermosoudage, pour un échantillon de film de 25,4 micromètres (1 mil) soudé à une pression de 101 kPa pendant environ une seconde en utilisant un appareil de thermosoudage Sentinel modèle 12-12A muni d'une barre de 3 mm (1/8 inch) de largeur, comprise dans la plage de 105°C à 140°C,
(c) une teneur en matières extractibles par l'hexane 21 C.F.R. 177.1520 (c) (3.1&3.2) à 50°C allant jusqu'à 5,5 %, et
(d) un trouble ASTM D-1003 allant jusqu'à 6 %.

8. Composition polymérique suivant la revendication 7, dans laquelle le copolymère statistique (a) a en outre
(e) une teneur en matières solubles dans le xylène 21 C.R.F 177.5120 à 23°C allant jusqu'à 13 % ; et
(f) un module AST D882 (sécant à 1 % mesuré à 1,3 mm (0,05 inches) par minute) d'au moins 41 mPa (60 000 psi).

9. Film ou feuille d'emballage thermosoudable, vieilli à température ambiante, obtenu à partir d'une composition polymérique suivant l'une quelconque des revendications 1 à 8.

10. Composition polymérique comprenant un copolymère statistique de 5 à 15 % en poids de butène-1 et de 85 à 95 % en poids de propylène, ladite composition ayant :
(a) un allongement à la rupture, suivant la norme ASTM D882, compris dans l'intervalle de 600 % à 2000 %,
(b) une température de déclenchement de thermosoudage, pour un échantillon de film de 25,4 micromètres (1 mil) soudé à une pression de 101 kPa pendant environ une seconde en utilisant un appareil de thermosoudage Sentinel modèle 12-12A muni d'une barre de 3 mm (1/8 inch) de largeur, comprise dans la plage de 105°C à 140°C,
(c) une teneur en matières extractibles par l'hexane 21 C.F.R. 177.1520 (c) (3.1&3.2) à 50°C allant jusqu'à 5,5 %, et
(d) un trouble ASTM D-1003 allant jusqu'à 2 % ;
ladite composition pouvant être obtenue en y incorporant (1) au moins un additif, et (2) au moins un agent clarifiant qui consiste en montanate de calcium, une cire polyoléfinique ayant une viscosité de 500 mPa.s à 2000 mPa.s à 170°C, ou une de leurs associations.

11. Composition polymérique suivant la revendication 10, dans laquelle le copolymère statistique comprend 6 à 13 % en poids de butène-1 et 87 à 94 % en poids de propylène.

12. Composition polymérique suivant la revendication 10, qui a en outre
(e) une teneur en matières solubles dans le xylène 21 C.R.F. 177.1520 à 23°C allant jusqu'à 13 % ; et
(f) un module ASTM D882 (sécant à 1 % mesuré à 1,3 mm (0,05 inches) par minute) d'au moins 41 mPa (60 000 psi).

13. Procédé pour la préparation d'une composition polymérique comprenant un copolymère statistique de 5 à 15 % en poids de butène-1 et de 85 à 95 % en poids de propylène, ladite composition ayant
(a) un allongement à la rupture, suivant la norme ASTM D882, compris dans l'intervalle de 600 % à 2000 %,
(b) une température de déclenchement de thermosoudage, pour un échantillon de film de 25,4 micromètres (1 mil) soudé à une pression de 101 kPa pendant environ une seconde en utilisant un appareil de thermosoudage Sentinel modèle 12-12A muni d'une barre de 3 mm (1/8 inch) de largeur, comprise dans la plage de 105°C à 140°C,
(c) une teneur en matières extractibles par l'hexane 21 C.F.R. 177.1520 (c) (3.1&3.2) à 50°C allant jusqu'à 5,5 %, et
(d) un trouble ASTM D-1003 allant jusqu'à 2 % ;
procédé qui comprend la copolymérisation de propylène et de butène-1 pour former un copolymère comprenant 5 % à 15 % en poids de butène-1 et 85 % à 95 % en poids de propylène, et l'addition audit copolymère (1) d'au moins un additif et (2) d'au moins un agent clarifiant qui consiste en montanate de calcium, une cire polyoléfinique ayant une viscosité de 500 mPa.s à 170°C à 2500 mPa.s à 170°C, ou une de leurs associations.

14. Procédé suivant la revendication 13, dans lequel la composition polymérique a en outre
(e) une teneur en matières solubles dans le xylène 21 C.R.F. 177.1520 à 23°C allant jusqu'à 13 % ; et
(f) un module ASTM D882 (sécant à 1 % mesuré à 1,3 mm (0,05 inches) par minute) d'au moins 41 mPa (60 000 psi).

15. Procédé suivant la revendication 13, dans lequel la polymérisation est effectuée avec une formulation de catalyseur contenant du magnésium et du titane, comprenant
(a) un procatalyseur contenant du titane et du magnésium obtenu en mettant en contact un composé de magnésium, un halogénure de titane tétravalent et un donneur d'électrons facultativement en présence d'un diluant inerte,
(b) un cocatalyseur consistant en un composé organique d'aluminium, et (c) un agent d'ajustement de sélectivité consistant en un organosilane.

16. Composition polymérique viscoréduite qui est préparée en mettant en contact une composition polymérique suivant l'une quelconque des revendications 1 à 8, ou 10 à 12, qui a un indice d'écoulement en masse fondue d'au moins 0,8 dg/min avec un peroxyde à une température élevée, de telle sorte que le rapport des indices d'écoulement en masse fondue du produit viscoréduit à la composition non viscoréduite de départ soit au moins égal à 2,0.
